(19) **Europäisches Patentamt**
**European Patent Office**
**Office européen des brevets**

(11) Veröffentlichungsnummer : **0 250 901 B1**

(12) **EUROPÄISCHE PATENTSCHRIFT**

(45) Veröffentlichungstag der Patentschrift :
10.04.91 Patentblatt 91/15

(51) Int. Cl.⁵ : **F01N 7/08, F16L 27/10**

(21) Anmeldenummer : **87107996.8**

(22) Anmeldetag : **03.06.87**

(54) Vorrichtung zur Entkopplung von Torsionsbewegungen zwischen Rohrteilen.

(30) Priorität : 04.07.86 DE 3622481

(43) Veröffentlichungstag der Anmeldung :
07.01.88 Patentblatt 88/01

(45) Bekanntmachung des Hinweises auf die
Patenterteilung :
10.04.91 Patentblatt 91/15

(84) Benannte Vertragsstaaten :
DE ES FR GB IT SE

(56) Entgegenhaltungen :
EP-A- 226 088
EP-A- 0 208 128
DE-A- 2 701 022
DE-A- 3 321 382
DE-C- 394 078
FR-A- 2 451 456
FR-A- 2 568 309
US-A- 2 407 745
US-A- 3 107 107

(73) Patentinhaber : IWK Regler und
Kompensatoren GmbH
Singerstrasse
W-7513 Stutensee (DE)

(72) Erfinder : Holzhausen, Wieland, Dr.Dipl.-Ing.
Ernsting 8
W-8351 Auerbach (DE)
Erfinder : Helfricht, Roland, Dipl.-Ing.
Robert-Koch-Strasse 23
W-7518 Bretten (DE)
Erfinder : Kunzmann, Thomas, Dipl.-Ing.
Richard-Wagner-Strasse 13
W-7519 Walzbachtal (DE)

(74) Vertreter : Dr.-Ing. Hans Lichti Dipl.-Ing. Heiner
Lichti Dipl.-Phys. Dr. Jost Lempert
Postfach 41 07 60 Durlacher Strasse 31
W-7500 Karlsruhe 41 (DE)

**Beschreibung**

Die Erfindung betrifft eine Vorrichtung zur Entkopplung von Torsionsbewegungen zwischen zwei Rohrteilen der Abgasanlage eines Kraftfahrzeugs, insbesondere zwischen einem Abgasrohr eines Kraftfahrzeugmotors und der restlichen Abgasanlage, mit einem Balg zur Aufnahme axialer und angularer Bewegungen.

Die FR-A-25 68 309 zeigt eine gattungsgemäße Vorrichtung zur Ermöglichung einer drehbeweglichen Verbindung zweier Teile einer Abgasanlage eines Kraftfahrzeugs, die ein Balgteil zur Gewährleistung axialer, lateraler und angularer Flexibilität unter Beweglichkeit aufweist. Zur Ermöglichung der Torsionsentkopplung sind dort an beiden miteinander zu verbindenden Rohrenden balgförmige Ausbildungen vorgesehen, die ineinandergreifen. Zwischen den ineinandergreifenden Balgteilen können zusätzliche Schichten vorgesehen sein, die den ineinandergreifenden Balgteilen folgen. Diese Schichten sollen nach der Druckschrift aus einem synthetischen Film, Metallgewebeschläuchen oder einer Wäremisolationsschicht bestehen. Diese Ausgestaltung ist herstellungstechnisch und materialmäßig aufwendig, da die genannten mit den balgförmigen Ausbildung versehenen Rohrenden über die gesamte Balglänge übereinander geführt werden müssen, wobei darüber hinaus diese Anordnung druck- und störanfällig ist, da die Relativbewegung voll auf den Balg durchschlagen können.

Aus der DE-OS 33 21 382 ist die Entkopplung und Dämpfung axialer, angularer und lateraler Relativbewegungen zweier durch einen Balg verbundenen Rohrstutzen durch Dämpfungselemente aus Metalldrahtkissen bekannt. Bei diesen bekannten Vorrichtungen sind, wie auch bei anderen Vorrichtungen, bei denen zwischen mit den beiden Rohrstutzen versehenen Flanschen Federn angeordnet sind, die Bälge jeweils fest mit den Enden der Rohrstutzen verbunden. Torsionsbewegungen können daher auf die Bälge einwirken und zur Verminderung ihrer Lebensdauer bzw. zu Beschädigungen beitragen.

Es wurden schon Kugelgelenk-Lösungen vorgeschlagen, bei denen keine Bälge vorhanden sind und daher das vorgenannte Problem nicht auftreten kann, im übrigen durch die kugelgelenkartige Ausbildung relative Drehbewegungen der Rohrenden in gewissem Umfange möglich sind.

Torsionsbewegungen können insbesondere bei quer liegenden Motoren dadurch entstehen, daß als Anregung aus der Zündfolge Pendelschwingungen des Motors auftreten, die auf das Abgasrohrleitungssystem als Torsionsbewegungen wirken. Bei Längsanordnungen von Motoren wirken Lastschlagbewegungen torsional auf das Abgasanlagensystem. Eine von der Systemachse abweichende Rohrführungs- und Schalldämpferanordnung mit asymmetrischer Aufhängung und Massenverteilung können ebenfalls Torsionsbewegungen bedingen, die durch Schwingungen aus Fahranregungen verstärkt werden können.

Der Erfindung liegt die Aufgabe zugrunde eine gattungsgemäße Vorrichtung unter Vermeidung der genannten Nachteile dahingehend weiterzubilden, daß bei Erreichung einer vollständigen Kupplung von an einem Rohrstutzen auftretender Torsionsbewegung zum anderen Rohrstutzen hin eine hohe Standfestigkeit bei herstellungs- und materialmäßiger Optimierung erreicht wird.

Erfindungsgemäß wird die genannte Aufgabe bei einer Vorrichtung der eingangs genannten Art dadurch gelöst, daß zwischen den beiden Rohrteilen den Balg entlastende Bewegungs-Dämpfungsglieder angeordnet sind und daß ein Ende des Balgs mit dem Rohrteil über zumindestens einen Gleitring drehbeweglich in Verbindung steht.

Mit dem oder den Gleitringen wird ein Lager gebildet. Das gegenüber dem erwähnten Ende andere Ende des Balgs kann und wird in der Regel fest mit dem anderen Rohrstutzen in Verbindung stehen, indem es beispielsweise mit ihm oder einem an ihm befestigten Flansch verschweißt ist. Grundsätzlich könnte aber auch das zweite Ende des Balgs in entsprechender Weise axial fest, aber drehbeweglich mit dem anderen Rohrstutzen in Verbindung stehen. Die Verbindung zwischen den beiden Rohrstutzen, deren einer gegebenenfalls mit dem Motor und deren anderer mit einem Schalldämpfersystem (zur Abgasablage hin) verbunden ist, erfolgt also durch ein Entkopplungsglied, durch das Torsionsbewegungen, die Torsionsverformungen im Balg bedingen könnten, freigegeben werden. Hierdurch wird sowohl das Rohr als auch der Balg bis auf ein geringes Torsionsreibmoment weitestgehend torsional entlastet.

In einer bevorzugten Ausgestaltung ist vorgesehen, daß die Gleitringe in einem gehäuseartigen, aus mit einem Rohrstutzen und mit einem Balgende verbundenen Hülsenteilen gebildeten Lagerkäfig dicht einsitzend angeordnet sind, wobei weiterhin vorgesehen sein kann, daß zwei Gleitringe mit einem Abstand zueinander angeordnet sind, der vorzugsweise in der Größenordnung von 0,5 bis 1,5 der lichten Weite der angeschlossenen Rohre oder Rohrstutzen liegt. Hierdurch wird eine radial-axiale Führung erreicht, die torsional jedoch weitgehend frei ist. Gegebenenfalls vorgesehene Dämpfungsglieder werden vorzugsweise getrennt von einem Rohrstutzen her derart angebunden, daß sie zwar dämpfend auf am Balg angreifende axiale und angulare Bewegungen wirken, aber ebenfalls über die Gleitringe lediglich drehbeweglich mit dem anderen Rohrstutzen radial und axial geführt in Verbindung stehen. Die Gleitringe können dabei in Fest- und Loslagern oder lediglich in Festlagern angeordnet sein. Je nach Anordnung von Gleitringen, deren Lagern und Balg sowie gegebenenfalls Dämpfungsgliedern relativ zueinander, können an die jeweiligen Einbauverhältnisse angepaßte relativ kompakte Vorrichtungen, d.h. Vorrichtungen geringer Baulänge, die dafür radial weiter Raum greifen, oder aber Vorrichtungen mit geringem Durchmesser, die dafür eine größere axiale Erstreckung aufweisen, geschaffen werden.

Es können weiterhin integrierte Lösungen vorgesehen sein, bei denen ein Ende des Balgs bzw. eine mit einem Ende des Balgs verbundene Scheibe zwischen einem Dämpfungskissen und einem mit einem Rohrstutzen – mit dem der Balg nicht fest verbunden ist – verbundenen radialen Flansch unter Zwischenlage eines Gleitrings verspannt ist, wobei eine radiale Führung gegebenenfalls durch breit angelegte Dämpfungskissen erreicht wird, so daß nur ein als Dichtung wirkender Gleitring vorgesehen sein muß.

Die als Dichtung wirkenden Gleitringe können aus Keramik, Sintermetallen, hitzebeständigen Kunststoffen bestehen, Gestricke- oder Geflechtringe aus geeigneten Metallen und Metalllegierungen je nach geeigneter Behandlung sein. Dabei werden Gleitringe in letzterem Falle vorzugsweise aus weichgeglühten Drähten hergestellt und in die endgültige Form verpreßt. Die Gleitringe sind nicht nur temperatur-, sondern grundsätzlich formbeständig und Gleitringe aus Drahtpreßteilen erhalten ihre Formbeständigkeit durch Verpressen bis zu einer spezifischen Masse von mindestens 1,6u vorzugsweise aber 2,5 bis 5 g/ccm. Aus Drähten verpreßte Gleitringe oder Sinterwerkstoffe können weiterhin als Depot für Gleitmittel dienen.

Als Gleitmittel kommen unterschiedlichste Mittel und Stoffe, wie auf mineralischer und synthetischer Basis, Siliziumverbindungen oder dergleichen in Frage. Ein bevorzugtes Mittel ist Metallpulver, vorzugsweise Kuferpuder mit Bindemitteln. Die Dimensionierung der Gleitringe ist derart, daß sie radial Rohre, auf denen sie aufsitzen, dicht umgeben und-/oder im übrigen axial fest in einem geeigneten Lager verspannt sind, so daß eine zuverlässige Dichtung gewährleistet ist. Es ist dabei verständlich, daß die die Dichtung gewährleisteten Gleitringe vorzugsweise nicht innerhalb des inneren durch die Rohrstutzen geführtes Gasstromes liegen, sondern daß vorzugsweise ein den inneren Gasstrom führendes Leitrohr vorgesehen ist, außerhalb dessen die Dichtungen angeordnet sind, so daß sie zumindestens im "Windschatten" des Gastromes liegen. Vorzugsweise ist dabei der Stutzen als Leitrohr verlängert, aus dessen Richtung die Gasströmung kommt, der also gegebenenfalls mit dem Abgas erzeugenden Motor verbunden ist.

Weitere Vorteile und Merkmale der Erfindung ergeben sich aus den Ansprüchen und aus der nachfolgenden Beschreibung, in der Ausführungsbeispiele der erfindungsgemäßen Entkopplungsvorrichtung unter Bezugnahme auf die Zeichnung im einzelnen erläutert sind. Dabei zeigt im Hinblick auf die Rotations-Symmetrie jeweils nur die obere Hälfte und im Längsschnitt

Fig. 1 eine erste Ausführungsform mit einem Loslager für einen Gleitring ;

Fig. 2 eine andere Ausführungsform mit zwei Festlagern ;

Fig. 3 eine Ausführungsform, bei der Dämpfungsglied und Gleitringe jeweils auf einer Seite des Balgs angeordnet sind ;

Fig. 4 eine raumsparende Ausführungsform ;

Fig. 5 eine Ausführungsform mit geringerer Baulänge ;

Fig. 6 eine weitere Ausführungsform ;

Fig. 7 eine Ausführungsform ähnlich der Figur 6, bei der ein Balgende zwischen die Dämpfungskissen eines Dämpfungsglieds geführt ist.

Fig. 8 eine Detaildarstellung der Figur 7 ; und

Fig. 9 eine andere Festlegung des Balgendes als in Figur 8.

Die erfindungsgemäße Entkopplungsvorrichtung 1 weist zwei Rohrstutzen 2, 3 auf, deren einer vorzugsweise mit dem Motor eines Kraftfahrzeugs und deren anderer mit der Abgasanlage des Kraftfahrzeugs verbindbar ist. Zwischen den beiden Rohrteilen 2, 3 ist ein Metallbalg 4 angeordnet, der eine axiale, angulare und laterale Relativbeweglichkeit der beiden Rohrstutzen 2, 3 gewährleistet. Es ist weiterhin ein Dämpfungsglied 6 mit zwei gegeneinander verspannten Dämpfungskissen 7 vorgesehen, das zur Vermeidung einer Überbeanspruchung des Balgs 4 in den genannten Freiheitsgraden dient. Grundsätzlich sind derartige Dämpfungsglieder aus der DE-OS 33 21 382 bekannt.

Der Balg 4 ist an seinem einen Ende 11 im dargestellten Ausführungsbeispiel mit dem Rohr 3 verbunden. Weiterhin erstreckt sich von diesem Ende 11, ebenfalls fest verbunden mit dem Rohrstutzen 3, ein Profilrohr 12, daß zunächst den Balg 4 umgibt und schließlich in einem hülsenartigen Gehäuse 13 endet, das die Dämpfungskissen 7, 8 umschließt und dessen Stirnseiten erste Widerlagerflächen 14, 16 für die Dämpfungskissen 7, 8 des Dämpfungsglieds 6 bilden. Zwischen den Dämpfungskissen 7, 8 sind zweite Widerlagerflächen 17, 18 – gebildet durch eine U-förmige Ausbiegung 19 eines weiteren Rohrteils 21 – vorgesehen. Das Rohrteil 21 ist mit dem anderen Ende 22 des Balgs 4 fest verbunden.

Bei beispielsweise Dehnung des Balgs wird die Widerlagerfläche relativ zur Widerlagerfläche 18 gegen das Dämpfungskissen 7 gedrückt, welches derart wirksam wird, während bei einer Stauchung des Balgs die Widerlagerfläche 16 relativ zur Fläche 17 gegen das Kissen 8 gedrückt wird, so daß dieses seine Dämpfungswirkung entfaltet.

Das Rohrteil 21 bildet zusammen mit einer Sicke 23 des ersten Rohrstutzens 2 sowie ein im Schnitt bügelartiges, fest mit dem Rohrteil 21 verbundenes

Rohrteil 24 gehäuseartige Lagerflächen für Gleitringe 26, 26', 26". Die Gleitringe 26, 26" sind dabei in durch die Teile 21, 22 mit 23 und 24 gebildete Festlager und der Gleitring 26' in einem durch Radialflansche der Rohrteile 21, 24 und den Außenumfang des Rohrstutzens 2 gebildeten Loslager eingeschlossen. Die Gleitringe bestehen aus temperatur- und formbeständigen Materialien. Sie sind in ihren Lagern dicht eingesetzt, so daß sie zwischen den Teilen 2 und 21 eine Dichtung bilden. Als Materialien kommen in Frage : Keramik, Sintermetalle, hitzebeständige Kunststoffe, Gestricke oder Geflechtringe aus Ferriten, Cr-Ni-Legierungen, Ni- und NiCu-Legierungen, Gestricke aus nicht metallischen Fäden,aus Drähten mit galvanischen Überzügen etc. Im Falle von Gestricke- oder Geflechtringen sind diese so hoch verpreßt, daß sie derart formstabil sind, daß sie keine Dämpfungsfunktion mehr entfalten, vorzugsweise bestehen sie aus weich geglühten Materialien. Ringe aus verpreßtem Draht dienen darüberhinaus als Aufnahmematrix zur Aufnahme hitzebeständiger Gleit- und Füllstoffe, wie Kupferpulver mit Bindemittel oder dergleichen.

Abgesehen von der schon erläuterten Dämpfung insbesondere axialer und angularer Relativbewegungen der Rohrenden 2, 3 gewährleistet die beschriebene Ausgestaltung mit Gleitringen folgendes : Bei Torsionsbewegungen zwischen den Rohrstutzen 2, 3 kann der Rohrstutzen sich aufgrund der Gleitringe 26, 26, 26" frei gegenüber zunächst dem Rohrteil 21 verdrehen, so daß keine Torsionsbewegungen auf den Balg 4 übertragen werden.

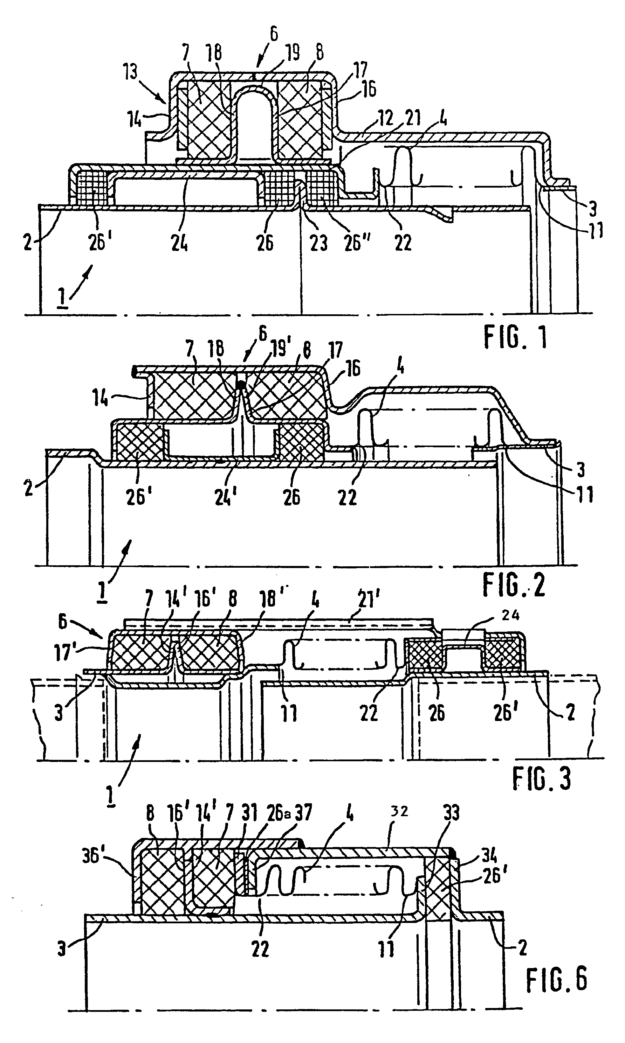

Bei den weiteren Ausführungsbeispielen sind grundsätzlich gleiche Elemente mit gleichen Bezugszeichen beschrieben und insofern nicht weiter erläutert. Die Ausgestaltung der Figur 2 entspricht im wesentlichen der Ausgestaltung der Figur 1, abgesehen davon, daß die Widerlager 17, 18 durch eine Sicke 19' im Rohrteil 21 gebildet sind. Darüberhinaus sind die Gleitringe 26' und 26 in Festlagern eingeschlossen, die einerseits aus dem Rohrteil 21 und andererseits aus einem fest mit dem Rohrstutzen 2 verbundenen, im Querschnitt U-förmigen Rohrabschnitt 24' gebildet sind. Wirkungsweise und Funktion sind, abgesehen davon, daß hier kein Loslager vorhanden ist, die gleichen wie bei der Ausgestaltung der Figur 1.

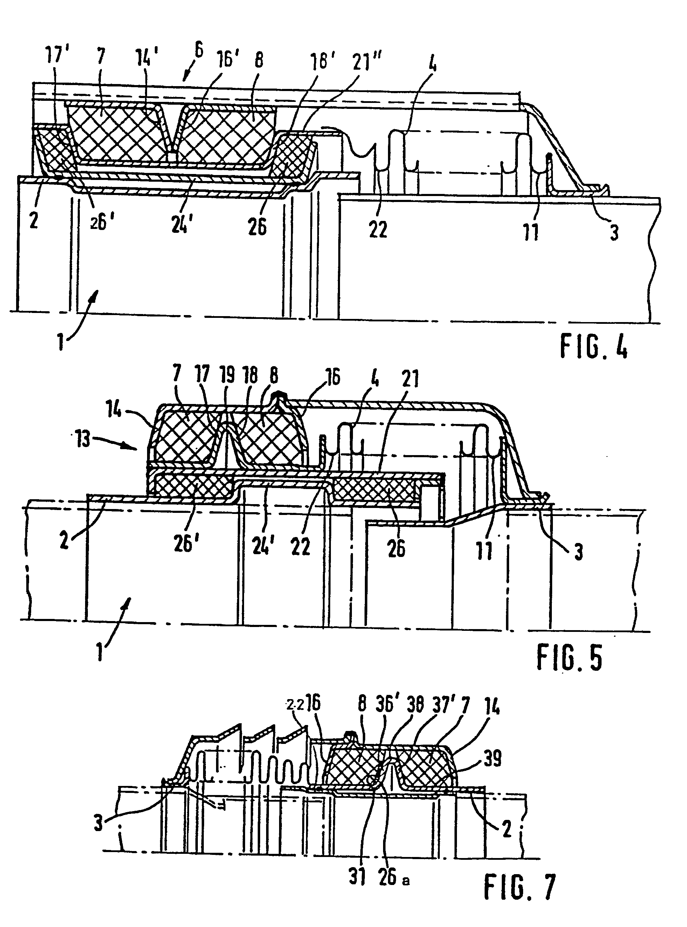

Bei der Ausgestaltung der Figur 3 liegen die mit dem Rohrstutzen 3 verbundenen Widerlager 14, 14' zwischen den beiden Dämpfungskissen 7, 8, während die Widerlager über ein Rohrteil 21' mit dem dem Rohrstutzen 3 entgegengesetzten Ende 22 des Balgs 4 verbunden sind. Weiterhin sind die Gleitringe 26, 26' auf der dem Dämpfungsglied 6 entgegengesetzten Seite des Balgs 4 angeordnet, so daß im dargestellten Ausführungsbeispiel nicht ein dem Rohrteil 12 entsprechender mit dem Rohrstutzen 3 verbundener Rohrteil, sondern das mit dem freien Ende 22 des Balgs 4 verbundene Teil 21 diesen übergreift. Es handelt sich hier um eine Ausführungsform mit gegenüber den Figuren 1 und 2 geringeren radialen Abmessungen unter Inkaufnahme einer größeren Baulänge.

Eine optimal kompakte Ausgestaltung ist diejenige der Figur 4. Hier liegen die Gleitringe 26, 26' an den Außenseiten der die Dämpfungskissen 7, 8 umschließenden Widerlager 17, 18 des mit dem freien Balgende 21 verbundenen Profilrohrteils 21" an und werden von einem mit dem Rohrstutzen 2 verbundenen und diesen umgebenden im Schnitt nach Außen offenen U-förmigen Rohrteil 24' umfaßt.

Eine Ausführungsform äußerst kurzer Baulänge, aber mit größeren radialen Abmessungen ist der Figur 5 zu entnehmen, hier sind die Gleitringe 26, 26' radial einerseits vom Dämpfungsglied 6, andererseits vom Balg 4 umgeben.

Die Figur 6 stellt eine integrierte Lösung da, bei der das freie Balgende 22 mit einem Tragring 31 verbunden, der zusammen mit einem Gleitring 26a zwischen den Dämpfungskissen 7, 8 und einem den Balg 4 übergreifenden am Rohrende 2 festgelegten Rohrabschnitt 32 eingespannt ist. Ein weiterer Gleitring 26' ist zwischen einem Flansch 33 des Rohrstutzens 3, wobei an diesem Flansch auch das Ende 11 des Balgs 4 befestigt ist und einem Radialflansch 34 am Rohrstutzen 2 verspannt. Die Dämpfungskissen 7, 8 sind im dargestellten Ausführungsbeispiel zwischen den mit dem Rohrstutzen 3 verbundenen Widerlagern 14, 16 und mit dem Rohrstutzen 2 fest verbundenen Widerlagern 36, 37 verspannt.

Auch bei dieser Ausgestaltung wirkt bei einer Torsionsbewegung zwischen den Rohrstutzen 2 und 3 diese nicht auf den Balg 4, da zwischen dessen mit dem Haltering 31 verbundenen, nicht am Rohrstutzen 3 festgelegten Ende 22 und mit dem Rohrstutzen 2 fest verbundenen Teilen 32 der Gleitring 26a angeordnet ist.

Eine hinsichtlich der Anbindung des freien Endes des Balgs ähnliche Ausgestaltung, bei der die radiale Führung durch breit angelegte Dämpfungskissen 7, 8 gewährleistet ist, ist der Figur 7 zu entnehmen. Hier ist das freie Ende 22 des Balgs gemeinsam mit dem Gleitring 26a zwischen einem Dämpfungskissen 8 und einer Sicke 38 an einem mit dem Rohrstutzen 2 verbundenen Rohrteil 39 verspannt. Dabei ist ebenfalls wieder aufgrund der Anordnung des Gleitrings 26 zwischen dem Tragring 31 und der Widerlagerwandung 36 der Sicke 38 die Drehbeweglichkeit gewährleistet.

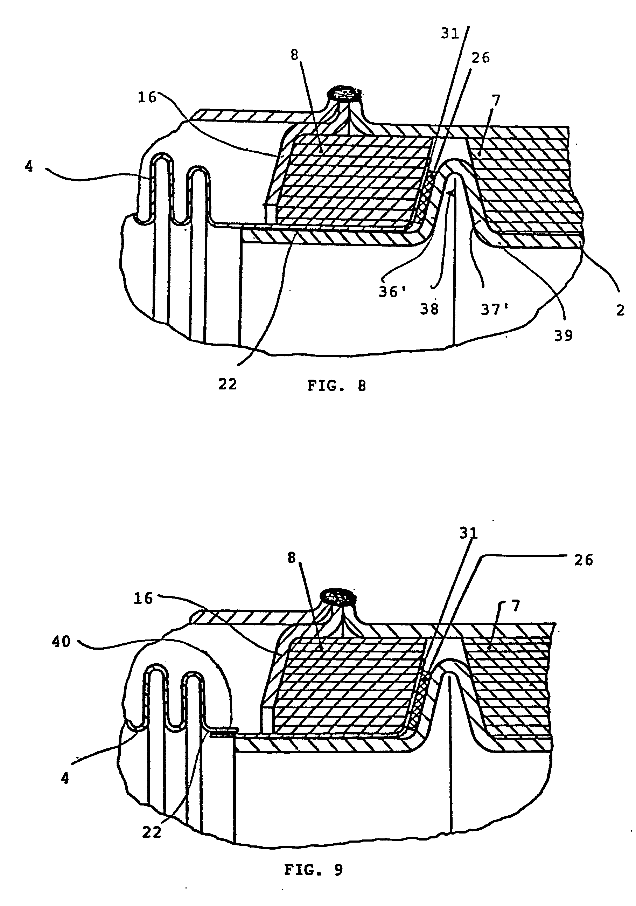

Die Figur 8 zeigt eine vergrößerte Detaildarstellung der Figur 7. Es ist deutlich erkennbar, daß das Ende 22 des Balgs 4 radial innerhalb des Dämpfungskissens 8 unter diesem hindurch und dann zu einem im wesentlichen radial gerichteten, ringförmig ausgebildeten Balgende geformt ist, welches den Halte- oder Tragring 31 bildet. Das Balgende 31 des Balgs 4 ist axial zwischen dem Dämpferkissen 8 und dem frei beweglichen Gleitring 26 angeordnet, der wiederum an der Widerlagerwand 36 der aus dem Ende 39 des Rohrs 2 ausgeformten Sicke 38, andessen anderer Widerlagerwandung 37 das weitere Dämpferkissen 7 anliegt.

Bei der Ausgestaltung der Figur 9 ist aus insbesondere fertigungstechnischen Gründen das Ende 22 des Balgs 44 nicht unter dem Dämpferkissen 8 hindurchgezogen, wie dies unter bezugnahme auf die Figur 8 beschrieben wurde, sondern es ist ein separater Balganschlußring 31 vorgesehen, der aus einem dem Balgende 31 der Figur 8 entsprechenden sich im wesentlichen radial erstreckenden Teil und einem sich axial erstreckenden Teil ausgebildet ist. Letzteres ist mit dem Balgende 22 durch eine Schweißverbindung 40 verbunden und liegt radial zwischen dem über die Sicke 38 hinrausragenden Ende des Rohres 2 und dem Dämpfungskissen 8, während der sich im wesentlichen radial erstreckende Teil des Balganschlußrings 31 wiederum in axialer Abfolge zwischen Dämpfungskissen 8 und dem separaten frei beweglichen Gleitring 28 liegt, der wiederum an der einen Widerlagerwandung 36 der Sicke 38 anliegt. Ansonsten ist die Ausgestaltung wie die der Figur 8. Die ganze Anordnung ist in dem mit den Widerlagern 16, 14 (letzteres in den Figuren 8 und 9 nicht mehr dargestellt; hierzu Figur 7) gebildeten Gehäuse unter Zwischenordnung der Sicke 38 mit ihren Widerlagerwandungen 36, 37 verspannt.

Die Lagerringe 26, 26', 26" und 26a liegen jeweils nicht in der Gasströmung, sondern gegen diese geschützt, insbesondere indem der Rohrstutzen 2, der an die Gas erzeugende Quelle angeschlossen wird, oder aber mit diesen fest verbundene Teile die Lagerringe radial abdecken. Der Rohrstutzen 2 weist dabei gegebenenfalls eine in die eigentliche Vorrichtung ragende Verlängerung 2' auf. Lediglich der eingespannte Ring, der zwischen den Flanschen 33, 34 liegt, ist in der Darstellung der Figur 6 nicht weiter abgedeckt. Dieser Ring muß aber auch keine vollständige Dichtungsfunktion zwischen Leitungsinneren und -äußeren übernehmen; diese wird hier durch den Balg 4 geleistet und der Lagerring 26a zwischen den Teilen 31, 36 ergänzt.

## Ansprüche

1. Vorrichtung zur Entkopplung von Torsionsbewegungen zwischen zwei Rohrteilen (2, 3) der Abgasanlage eines Kraftfahrzeugs, insbesondere zwischen einem Abgasrohr eines Kraftfahrzeugmotors und der restlichen Abgasanlage, mit einem Balg (4) zur Aufnahme axialer und angularer Bewegungen, **dadurch gekennzeichnet**, daß zwischen den beiden Rohrteilen (2, 3) den Balg (4) entlastende Bewegungs-Dämpfungsglieder (7, 8) angeordnet sind und daß ein Ende (22) des Balgs (4) mit dem Rohrteil (2) über zumindestens einen Gleitring (26, 26', 26", 26a) drehbeweglich in Verbindung steht.

2. Vorrichtung nach Anspruch 1, dadurch gekennzeichnet, daß die Gleitringe (26, 26', 26") in einem gehäuseartigen, aus mit einem Rohrstutzen (2) und mit einem Balgende (22) verbundenen Hülsenteilen (21, 21', 24, 24") gebildeten Lagerkäfig dicht einsitzend angeordnet sind.

3. Vorrichtung nach Anspruch 1, dadurch gekennzeichnet, daß ein Ende (22) des Balgs (4) bzw. eine mit einem Ende (22) des Balgs (4) verbundene Scheibe (31) zwischen einem Dämpfungskissen (8) und einem mit einem Rohrstutzen (2) – mit dem der Balg (4) nicht fest verbunden ist – verbundenen radialen Flansch (37) unter Zwischenlage eines Gleitrings (26) verspannt ist.

4. Vorrichtung nach Anspruch 3, dadurch gekennzeichnet, daß zwischen radialen Flanschen (33, 34) an beiden Rohrstutzen (2, 3) ein elastischer Dichtungsring (26') angeordnet ist.

5. Vorrichtung nach einem der vorangehenden Ansprüchen, dadurch gekennzeichnet, daß die elastischen Dichtungsringe (26, 26', 26") mit hinreichendem Axialabstand zueinander angeordnet sind.

6. Vorrichtung nach Anspruch 4 oder 5, dadurch gekennzeichnet, daß der Abstand zweier Gleitringe (26, 26', 26") das 0,5 bis 1,5- fache der lichten Weite der Rohrstutzen (2, 3) beträgt.

7. Vorrichtung nach einem der vorangehenden Ansprüche, dadurch gekennzeichnet, daß die Gleitringe formbeständige mit geringer Elastizität sind.

8. Vorrichtung nach einem der vorangehenden Ansprüche, dadurch gekennzeichnet, daß die Gleitringe aus einem hochverpreßtem Gestricke oder Geflecht aus Metalldraht bestehen.

9. Vorrichtung nach Anspruch 8, dadurch gekennzeichnet, daß die Gleitringe aus weichgeglühtem Drahtmaterial bestehen.

10. Vorrichtung nach einem der vorangehenden Ansprüche, dadurch gekennzeichnet, daß die Gleitringe ein spezifisches Gewicht von mehr als 1,6 g/ccm haben.

11. Vorrichtung nach Anspruch 10, dadurch gekennzeichnet, daß die Gleitringe ein spezifisches Gewicht von 2,5 bis 5 g/ccm aufweisen.

12. Vorrichtung nach einem der Ansprüche 7 bis 11, dadurch gekennzeichnet, daß die aus Metalldraht verpreßten Gleitringe mit Gleitmitteln verfüllt sind.

## Claims

1. Device for decoupling torsional movements between two pipe parts (2, 3) of the exhaust system of a motor vehicle, particularly between an exhaust pipe of an internal combustion engine and the remaining exhaust system, with a bellows (4) for absorbing axial and angular movements, characterized in that between the two pipe parts (2, 3) are provided bellows (4) -relieving movement damping members (7, 8) and that one end (22) of the bellows (4) is connected in rotary manner to the pipe part (2) via at least one slip ring (26, 26', 26", 26a).

2. Device according to claim 1, characterized in that the slip rings (26, 26', 26") are arranged in tightly seated manner in a casing-like bearing cage formed by sleeve parts (21, 21', 24, 24") connected to a pipe socket (2) and to a bellows end (22).

3. Device according to claim 1, characterized in that one end (22) of the bellows (4) or a disk (31) connected to one end (22) of the bellows (4) is braced between a damping cushion (8) and a radial flange (37) connected to a pipe socket (2) and not firmly connected to the bellows (4) and whilst interposing a slip ring (26).

4. Device according to claim 3, characterized in that an elastic packing ring (26') is positioned between the radial flanges (33, 34) on both pipe sockets (2, 3).

5. Device according to one of the preceding claims, characterized in that the elastic packing rings (26, 26', 26") are positioned with an adequate reciprocal axial spacing.

6. Device according to claims 4 or 5, characterized in that the spacing between two slip rings (26, 26', 26") is 0.5 to 1.5 times the inside diameter of the pipe sockets (2, 3).

7. Device according to one of the preceding claims, characterized in that the slip rings are shape-retaining with limited elasticity.

8. Device according to one of the preceding claims, characterized in that the slip rings comprise a highly compressed metal wire knitted or raided structure.

9. Device according to claim 8, characterized in that the slip rings are made from softly annealed wire material.

10. Device according to one of the preceding claims, characterized in that the slip rings have a specific gravity of more than 1.6 g/ccm.

11. Device according to claim 10, characterized in that the slip rings have a specific gravity of 2.5 to 5 g/ccm.

12. Device according to one of the claims 7 to 11, characterized in that the slip rings compressed from metal wire are filled with lubricants.

## Revendications

1. Dispositif pour le désaccouplement des mouvements de torsion entre deux éléments de tuyau (2, 3) du système d'échappement d'un véhicule automobile, en particulier entre un tuyau d'échappement d'un moteur de véhicule automobile et le reste du système d'échappement, comprenant un soufflet (4) pour l'absorption des mouvements axiaux et angulaires, **caractérisé en ce** que, entre les deux éléments de tuyau (2, 3), sont disposés des amortisseurs de mouvement (7, 8) qui déchargent le soufflet (4), et qu'une extrémité (22) du soufflet (4) est raccordée de manière mobile en rotation à l'élément de tuyau (2) par l'intermédiaire d'au moins un anneau de glissement (26, 26', 26", 26a).

2. Dispositif selon la revendication 1, caractérisé en ce que les anneaux de glissement (26, 26', 26") sont disposés de manière serrée dans une cage de palier en forme de boîtier constituée par des éléments de douille (21, 21', 24, 24") rattachés à une tubulure (2) et à une extrémité (22) du soufflet.

3. Dispositif selon la revendication 1, caractérisé en ce que l'une des extrémités (22) du soufflet (4), et respectivement un disque (31) relié à l'une des extrémités (22) du soufflet (4), est bloquée entre un coussin d'amortissement (8) et une bride radiale (37) solidaire d'une tubulure (2) – avec laquelle le soufflet (4) n'est pas solidaire – avec interposition d'un anneau de glissement (26).

4. Dispositif selon la revendication 3, caractérisé en ce qu'un joint d'étanchéité élastique (26') est disposé entre des brides radiales (33, 34) sur les deux tubulures (2, 3).

5. Dispositif selon l'une des revendications précédentes, caractérisé en ce que les joints d'étanchéité élastiques (26, 26', 26") sont disposés à une distance axiale suffisante les uns par rapport aux autres.

6. Dispositif selon l'une des revendications 4 ou 5, caractérisé en ce que la distance entre deux anneaux de glissement (26, 26', 26") est égale à 0,5 à 1,5 fois le diamètre intérieur des tubulures (2, 3).

7. Dispositif selon l'une des revendications précédentes, caractérisé en ce que les anneaux de glissement présentent une grande stabilité de forme avec une faible élasticité.

8. Dispositif selon l'une des revendications précédentes, caractérisé en ce que les anneaux de glissement sont réalisés à partir d'un tricotage ou tissage de fils métalliques.

9. Dispositif selon la revendication 8, caractérisé en ce que les anneaux de glissement sont réalisés à partir d'un matériau tréfilé recuit.

10. Dispositif selon l'une des revendications précédentes, caractérisé en ce que les anneaux de glissement présentent un poids spécifique de plus de 1,6 g/cm$^3$.

11. Dispositif selon la revendication 10, caractérisé en ce que les anneaux de glissement présentent un poids spécifique de 2,5 à 5 g/cm$^3$.

12. Dispositif selon l'une des revendications 7 à 11, caractérisé en ce que les anneaux de glissement réalisés par compression de fils métalliques sont remplis de lubrifiants.

FIG. 1

FIG. 2

FIG. 3

FIG. 6

FIG. 4

FIG. 5

FIG. 7

FIG. 8

FIG. 9

9